# EUROPEAN PATENT SPECIFICATION

(11) **EP 0 513 348 B1**
(45) Date of publication and mention of the grant of the patent: **05.04.1995**
(21) Application number: 90902368.1
(22) Date of filing: 29.01.1990
(51) Int. Cl.: B29C 33/02, B29C 35/02

(54) **VULCANIZATION METHOD AND APPARATUS FOR ELASTOMER ARTICLES**
VERFAHREN UND VORRICHTUNG ZUM VULKANISIEREN VON ELASTOMEREN GEGENSTÄNDEN
PROCEDE ET APPAREIL DE VULCANISATION D'ARTICLES ELASTOMERES

(43) Date of publication of application: 19.11.1992
(73) Proprietor: SUMITOMO GOMU KOGYO KABUSHIKI KAISHA, Hyogo 651 (JP)
(72) Inventor: KOBAYASHI, Michihito, Toyota-shi, Aichi 471 (JP)
(74) Representative: Stewart, Charles Geoffrey
(86) International application number: JP9000105
(87) International publication number: WO9111310

(56) References cited:
- JP-A- 1 184 106
- JP-A-55 074 854
- JP-A-59 114 042
- JP-A-62 037 107

## Description

### TECHNICAL FIELD

The present invention relates to a method and an apparatus for vulcanising elastomer products.

### BACKGROUND ART

When elastomer products (e.g. tyres) are vulcanised, the temperature of the vulcanising mould is conventionally controlled by heating a hot plate called a platen plate with steam or by an electric heater and thus raising the temperature of the mould which is fixed to the platen plate and in intimate contact therewith, or by heating a mould heating container called a dome with steam to raise the temperature of the mould accommodated in the dome.

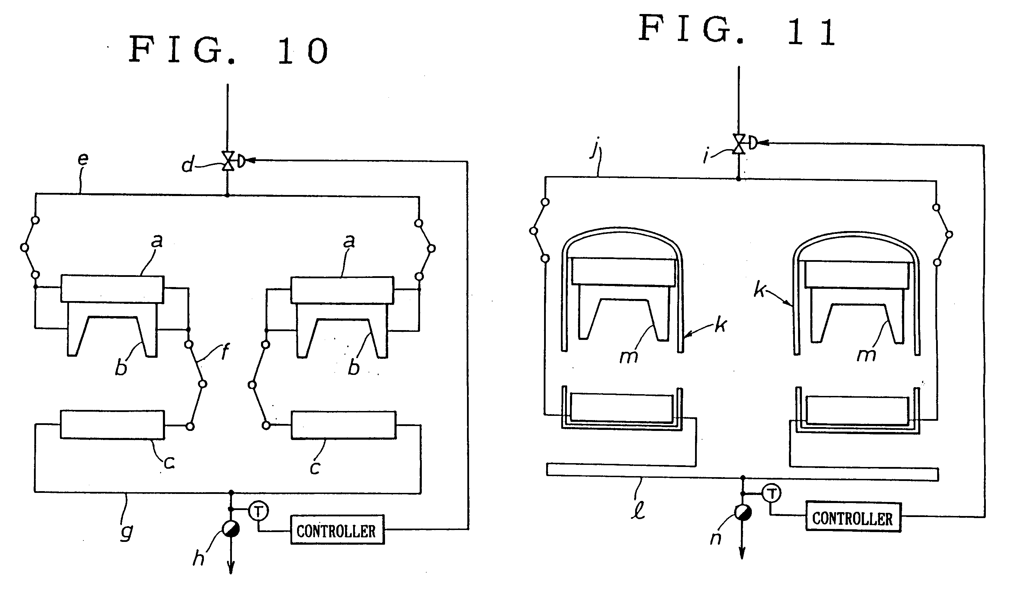

More specifically as shown in Figure 10, which shows a platen type tyre press, steam is supplied to an upper platen plate a and a jacket b from an unillustrated steam supply source through a pipe e when a valve d is opened. The steam is also fed to a lower platen plate c via a pipe f and discharged from the lower platen plate c through a pipe g. Thus, the upper and lower platen plates a, c and the jacket b are heated to the same temperature. With this method, therefore, the mould between the upper and lower platen plates is heated to approximately the same temperature at every portion thereof. A trap h is also shown in the drawing.

Further, referring to Figure 11 which shows an apparatus using a dome k, steam is supplied into the dome k by an unillustrated steam supply source via a pipe j when a valve i is opened and is discharged through a pipe l. Thus, the mould m inside the dome k is maintained at approximately the same temperature at every portion thereof. A trap n is also provided.

To ensure for high performance vehicles (having tyres of aspect ratios of 60% or 50%, etc) good performance and to save energy, tyres (elastomer products) in recent years must fulfil various requirements in relation to steering stability, ride comfort, grip, low fuel consumption, etc. It is desired to still further improve these properties. The tread and the sidewalls of a tyre are generally formed by differently compounded materials (hereinafter referred to as "rubber compounds"), which differ in optimum required vulcanising temperature for the rubber compound to exhibit the desired properties peculiar thereto. However, the vulcanising apparatus conventionally used is adapted to vulcanise the tread and the sidewalls at the same temperature, consequently sacrificing the properties of either one of these portions. For example, with tyres in which good steering stability is especially required, the rubber compound for the sidewalls becomes especially important, so the temperature of the mould needs to be set to the optimum vulcanising temperature for the sidewall rubber compound, i.e. to a level lower than is usually the case with normal tyres (i.e. tyres with an aspect ratio of 82%), to ensure the sidewall rubber compound properties are as required. However, with a tyre press having upper and lower platen plates or a dome, the lowering of the temperature of the platen plates or the dome leads to a similar decrease of the temperature of the overall mould portions and therefore lowers the temperature of the tread region which region is comparatively slow to cure which results in a longer vulcanisation time and thus seriously impairs productivity.

An object of the present invention is to provide a method of and an apparatus for vulcanisation for elastomeric products such as tyres which enables the tyre to exhibit, from portion to portion, the properties required thereof and which achieves improved productivity.

### DISCLOSURE OF THE INVENTION

Accordingly the present invention provides a method of vulcanising a tyre comprising placing the tyre in a mould comprising first mould members for forming the tread portion and second mould members for forming the sidewall portions and supplying a heating medium to vulcanise the tyre characterised by supplying a first heating medium to heat the first mould members, measuring the temperature of this first heating medium, controlling the supply of the first heating medium using its measured temperature to control the temperature of the first mould members, supplying a second heating medium to heat the second mould members, measuring the temperature of the second heating medium and controlling the supply of the second heating medium using its measured temperature to control the temperature of the second mould members.

As a result each of the different portions can exhibit the correct excellent properties of their own particular compound to give improved properties in the elastomer product obtained. Especially when the elastomer product is a tyre properties such as steering stability, ride comfort, grip, low fuel consumption, etc., are improved and the tyre is produced with a shortened vulcanising time and resultant improved productivity.

Another aspect of the invention provides an apparatus comprising first mould members and second mould members for forming the tyre tread and tyre sidewalls respectively and passages for the supply of heating medium characterised by a first set of passages for supplying a heating medium to heat the first mould members and a second set of passages for supplying a heating medium to heat the second mould members and first and second temperature control systems for controlling respectively the temperatures of the first and second mould members independently of each other.

Also elastomer products having parts needing different vulcanisation temperatures because of different thicknesses may be vulcanised according to this invention with the temperature of the portions of differing thickness independently controlled and selected. This makes it possible to greatly shorten the vulcanising time to provide improved productivity without impairing the properties of any portions of the product.

### BRIEF DESCRIPTION OF THE DRAWINGS

Figure 1 is a diagram showing an embodiment of an independent temperature control system in a vulcanising apparatus according to the present invention;
Figure 2 is an enlarged fragmentary view in section of the vulcanising apparatus;
Figure 3 is a graph showing the result of a thermocouple test conducted for tread portions vulcanised by the method of the invention;
Figure 4 is a graph showing the results of a thermocouple test conducted for sidewall portions;
Figure 5 is a diagram showing another embodiment of an independent temperature control system;
Figure 6 is a diagram showing another embodiment of an independent temperature control system;
Figure 7 is a graph showing the result of a thermocouple test conducted for tread portions;
Figure 8 is a graph showing the result of a thermocouple test conducted for sidewall portions;
Figure 9 is a diagram showing another embodiment of an independent temperature control system; and
Figures 10 and 11 are diagrams showing conventional single temperature control systems.

### BEST MODE OF CARRYING OUT THE INVENTION

Embodiments of the present invention will now be described with reference to the drawings.

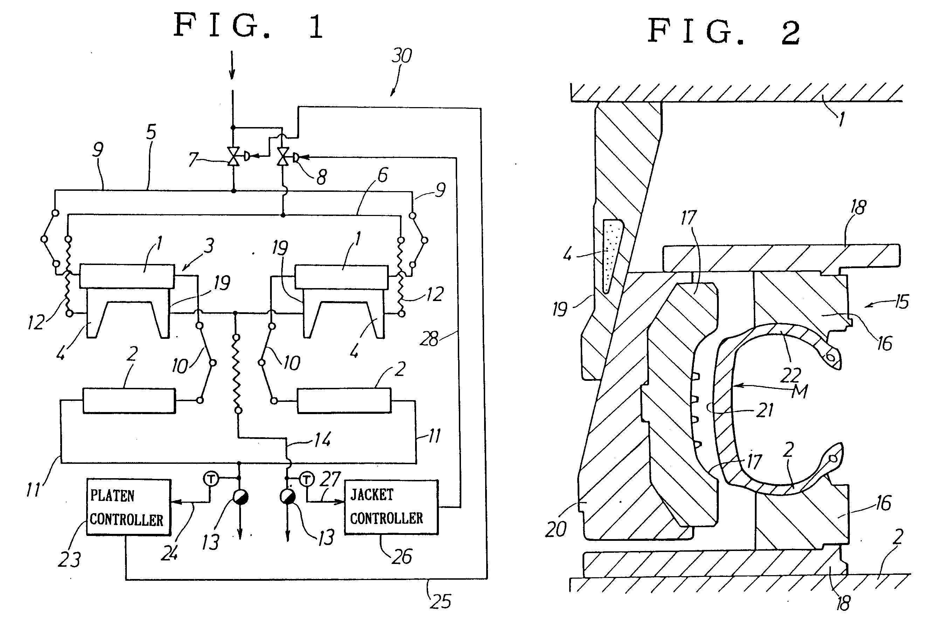

Figure 1 shows an independent temperature control system 30 for a vulcanising press for tyres according to the invention. The press is adapted for use with so-called segmented moulds as shown in Figure 2 and comprises platen assemblies 3 comprising upper and lower platens 1,2, an actuator 19 having a jacket 4 in its interior and attached to the upper platen 1, and platen piping 5 supplying steam to the platen assemblies 3 from an unillustrated steam supply source via a valve 8, and jacket piping 6 for supplying steam to the jackets 4 from the supply source which allows the temperature of different portions of the apparatus to be controlled independently of each other. For example, the temperature of the steam supplied to the platen assembly 3 and the temperature of the steam supplied to the jacket 4 are controlled separately and independently in the present embodiment. Incidentally, the source for supplying steam to the valve 7 and the source for supplying steam to the valve 8 may be the same or separate insofar as the temperature of the steam to be supplied to the platen assembly 3 and the temperature of the steam to be supplied to the jacket 4 are controlled separately.

Stated more specifically, the platen piping 5 comprises a supply portion 9 connecting the valve 7 to each upper platen 1, a connection portion 10 for connecting the upper platen 1 to the lower platen 2, a discharge portion 11 connecting the lower platen 2 to a trap 13, a connection portion 24 connecting the discharge portion 11 to a platen controller 23 via a thermometer T, and a return portion 25 connecting the platen controller 23 to the valve 7. The jacket piping 6 comprises a supply portion 12 connecting the valve 8 to each jacket 4, a discharge portion 14 connecting each jacket 4 to a trap 13, a connection portion 27 connecting the discharge portion 14 to a jacket controller 26 via a thermometer T, and a return portion 28 connecting the jacket controller 26 to the valve 8.

Figure 2 shows a segmental mould 15 for an elastomer product, which is a tyre M, in the partly closed condition. The mould 15 comprises two tyre sidewall plates 16, a tread ring 17 and a tread sector 20 and is provided between mould containers 18,18. Steam is supplied to the interior of the jacket 4 of the actuator 19.

When the mould 15 is completely closed, the upper platen 1 is in contact with the upper mould container 18, the lower platen 2 is in contact with the lower mould container 18, and the actuator 19 internally provided with the jacket 4 is in contact with the tread sector 20. Accordingly, the side mould members 16 and sidewall plates are heated by the platen assembly 3 (the upper platen 1 and the lower platen 2), and the tread ring 17 is heated by the jacket 4. Thus, the tread portion 21 and the sidewall portions 22, which are formed of differently compounded materials, can be independently and separately heated by the jacket 4 and the platen assembly 3, respectively, each to the required vulcanising temperature level for their respective compounded materials, i.e. to an optimum vulcanising temperature to permit the material to exhibit its unique properties.

The temperature at the discharge portion 11 of the platen piping 5 is measured by the thermometer T, and if the measurement is lower than the specified temperature, the valve 7 is opened by the controller 23, whereas if it is conversely higher, the valve 7 is closed, whereby the temperature of the platen assembly 3 is adjusted. As is the case with the platen assembly 3, the temperature of the jacket 4 is controlled by measuring the temperature at the jacket discharge 14 by the thermometer T, and opening the valve 8 by the controller 26 if the measurement is lower than the specified temperature or closing the valve 8 if otherwise. Thus, the method of vulcanisation described controls for each particular portion of the product being made the vulcanising temperature which permits the compounded material after vulcanisation to most effectively exhibit its intended properties, and the material is vulcanised at the selected temperatures each controlled independently and separately.

The vulcanising temperature of the sidewalls 22 (platen assembly 3) which contribute a great deal to the performance of the tyre, e.g. rolling resistance, is controlled to an optimum value to give the tyre performance while the temperature of the tread portion 21 (jacket 4) having the largest thickness and which is generally slowest to cure is raised, which gives the desired properties to the tyre without overcuring the sidewalls 22 and within a shortened period of vulcanising time to provide improved productivity.

Further, with such a segmented mould it is possible to vulcanise the sidewall portions 22 only at a low temperature for the same period of time as the high-temperature tread vulcanisation to satisfy the requirements as to the productivity and tyre performance.

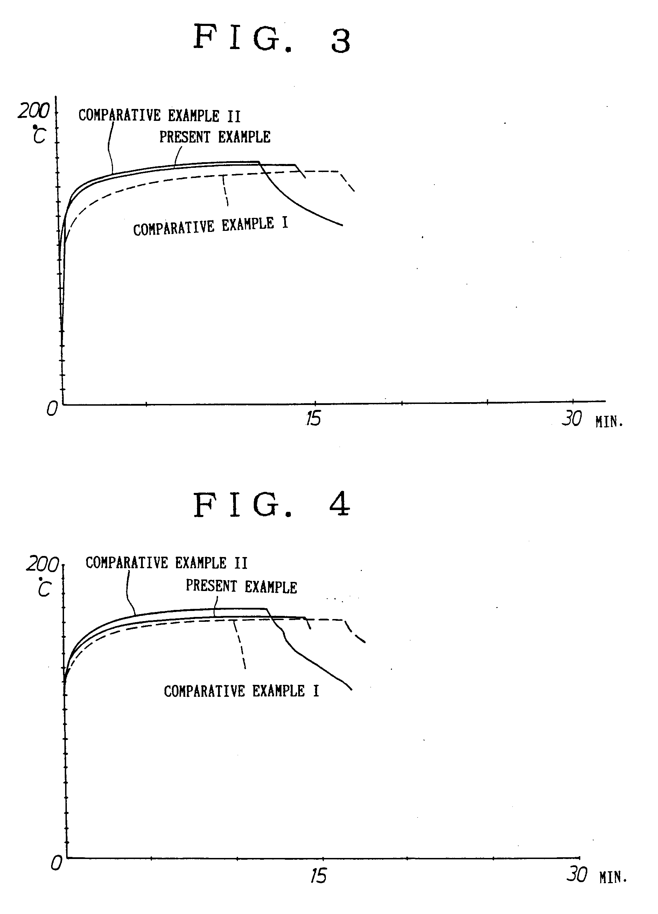

Next, tyres with a sidewall compound adapted to provide low fuel consumption were produced by heating the jacket 4 and the platen assembly 3 at different temperatures and using the above segmental mould 15. The results are given in Table 1 below and Figure 3 and Figure 4.

**TABLE 1**

| | Example | Comp.Ex.I | Comp.Ex.II |
|---|---|---|---|
| Temperature control | | | |
| Temp. of jacket | 180°C | 165°C | 180°C |
| Temp. of platen assembly | 165°C | 165°C | 180°C |

| Tyre Temp. in vulcanisation | | | |
|---|---|---|---|
| Sidewall temp. | 160°C | 160°C | 170°C |
| Tread temp. | 170°C | 160°C | 170°C |
| Vulcanising time | 13.5 min | 17 min | 13.5 min |
| Fuel consumption (rolling resistance) | 95 | 95 | 100 |

Based on the vulcanising temperature of Comparative Example II listed, Comparative Example I listed wherein the same temperature was used for the jacket 4 and the platen assembly 3 achieved a 5% improvement in fuel consumption but resulted in an increase of 3.5 minutes in the vulcanising time. However, the Example of the present invention, wherein different temperatures were used for the jacket 4 and the platen assembly 3, achieved an improvement in fuel consumption when used on a vehicle without changing the vulcanising time since a lower temperature was used for the sidewalls 22. This is critical from the viewpoint of the tyre performance but was obtained without changing the vulcanising temperature of the tread portion 21 which is slow to vulcanise.

Figure 3, showing the tread surface temperature, indicates that the tread portion 21 which is slow to vulcanise can be vulcanised at substantially the same temperature as in Comparative Example II.

Further Figure 4, showing the sidewall surface temperature, indicates that the present embodiment is adapted to use approximately the same temperature as in Comparative Example I for the sidewall compound for the compound to exhibit its properties most effectively.

Thus, the requirements of both tyre performance and productivity can be fulfilled by employing the same temperature as in Comparative Example II for the tread portion 21 which is slow to vulcanise but using a lower temperature for the sidewall portions 22.

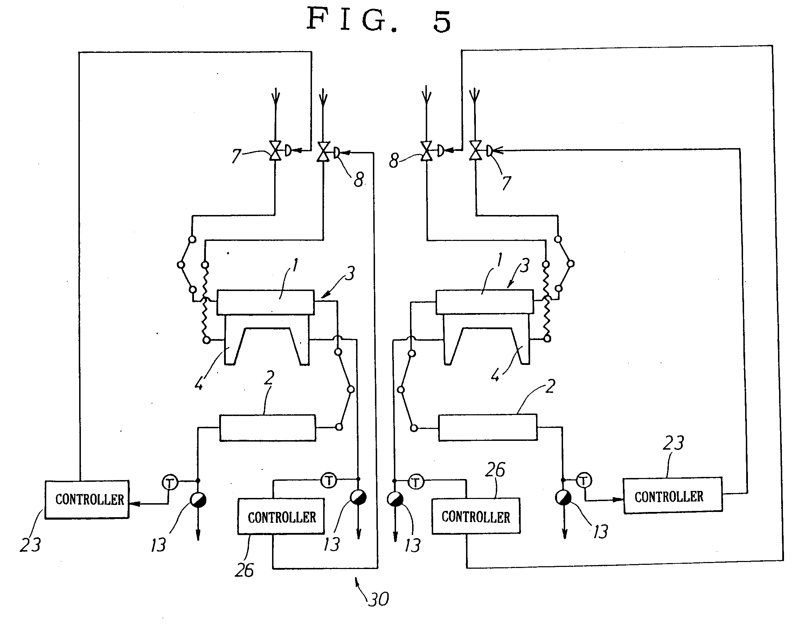

The embodiment of Figure 1, i.e. the independent temperature control system described, is designed to control a pair of moulds at the same time. Alternatively, separate supply piping and the discharge piping for each platen assembly 3 and each jacket 4 can be provided for each of the moulds in the form of separate opposed arrangements as shown in Figure 5.

The present invention is not limited to the foregoing embodiment but can be modified as desired without departing from the scope of the invention. For example, when a so-called two-piece mould is employed in the system wherein the tread portion 21 and the sidewall portions 22 are heated at different temperatures, different portions of the mould can be heated at different temperatures by incorporating steam piping or an electric heater into the mould and giving different amounts of heat from the platens (to the sidewall portions 22) and from the mould side (to the tyre tread portion 21).

In the case where the sidewalls 22 and the tread portion 21 are formed of the same compounded material, the sidewall portions 22 are likely to become overcured since the sidewall portions 22 are generally positioned closer to the platen assembly 3. The apparatus of the invention, if used in such a case, gives a lower temperature to the sidewall portions 22 to preclude the overcure.

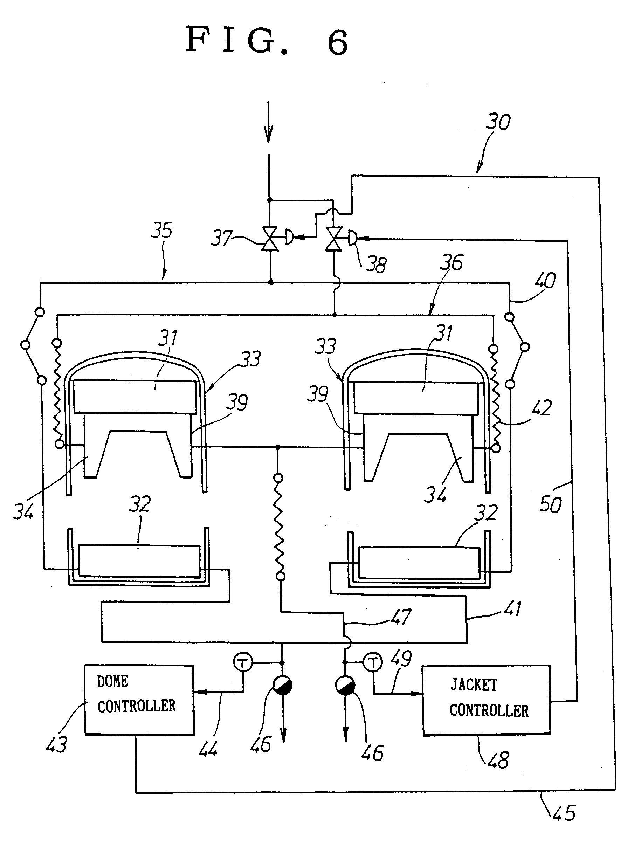

Figure 6 shows another embodiment, which comprises domes 33 each comprising upper and lower bolster plates 31,32, an actuator 39 having a jacket 34 in its interior and attached to the upper bolster plate 31, dome piping 35 for supplying steam to the domes 33 from an unillustrated steam supply source via a valve 37, and jacket piping 36 for supplying steam to the jackets 34 from the supply source via a valve 38. The temperatures of the different portions of the apparatus are controlled independently of each other. For example, the temperature of the steam supplied to the dome 33 and the temperature of the steam supplied to the jacket 34 are controlled separately and independently. Incidentally, the source for supplying steam to the valve 37 and the source for supplying steam to the valve 38 may be the same or separate also in this case insofar as the temperature of the steam to be supplied to the dome 33 and the temperature of the steam to be supplied to the jacket 34 are controlled individually.

The dome piping 35 comprises a supply portion 40 connecting the valve 37 to each dome 33, a discharge portion 41, a connection portion 44 connecting the discharge portion 41 to a dome controller 43 via a thermometer T, and a return portion 45 connecting the dome controller 43 to the valve 37. Further the jacket piping 36 comprises a supply portion 42 connecting the valve 38 to each jacket 34, a discharge portion 47 connecting each jacket 34 to a trap 46, a portion 49 connecting the discharge portion 47 to a jacket controller 48 via a thermometer T, and a return portion 50 connecting the jacket controller 48 to the valve 38.

The segmental mould 15, which is shown in Figure 2 while it is being closed, comprises side mould members 16,16, tread rings 17 and tread sectors 20 and is provided between mould containers 18,18. Steam is supplied to the interior of the jacket 4 of the actuator 19.

When the mould 15 (see Figure 2) is completely closed, the upper bolster plate 31 is in contact with the upper mould container 18, the lower bolster plate 32 is in contact with the lower mould container 18, and the actuator 19 internally having the jacket 34 is in contact with the tread sector 20. Accordingly, the side mould members 16 are heated by the dome 3, and the tread rings 17 are heated by the jacket 39. Thus, the tread portion 21 and the sidewalls 22 of the tyre, which are formed of differently compounded materials, can be independently individually heated by the jacket 34 and the dome 33, respectively, each to a vulcanising temperature corresponding to the compounded material, i.e. to an optimum vulcanising temperature to permit the material to exhibit its unique properties.

Thus, stated more specifically, the temperature at the discharge portion 41 of the dome piping 35 is measured by the thermometer T, and if the measurement is different to the specified temperature, the valve 37 is opened and closed by the controller 43 so that the temperature of the dome 33 is adjusted. Further the temperature of the jacket 34 is controlled by measuring the temperature at the discharge portion 47 of the jacket 34 by the thermometer T, and opening the valve 38 by the controller 48 if the measurement is lower than the specified temperature or closing the valve 38 if otherwise. Thus, like the apparatus of Figure 1, the present apparatus selects for each particular portion of the product to be obtained a vulcanising temperature which permits the cured compound material thereof to most effectively exhibit the contemplated properties, and the material is vulcanised at the selected temperature controlled independently and individually.

The vulcanising temperature of the sidewalls 22 (dome 33) which contribute greatly to the performance of the tyre, e.g. rolling resistance, is thus controlled to an optimum value for giving the properties, while the temperature of the tread portion 21 (jacket 34) having the largest wall thickness and generally slowest to cure is higher which gives the desired properties to the tyre without over-vulcanising the sidewall portions 22 within a shortened period of vulcanising time to achieve improved productivity.

Further with use of a segmental mould, it is possible to vulcanise only the sidewalls 22 at a low temperature for the same period of time as the high-temperature vulcanisation of the tread portion 21 to satisfy the requirements as to productivity and properties.

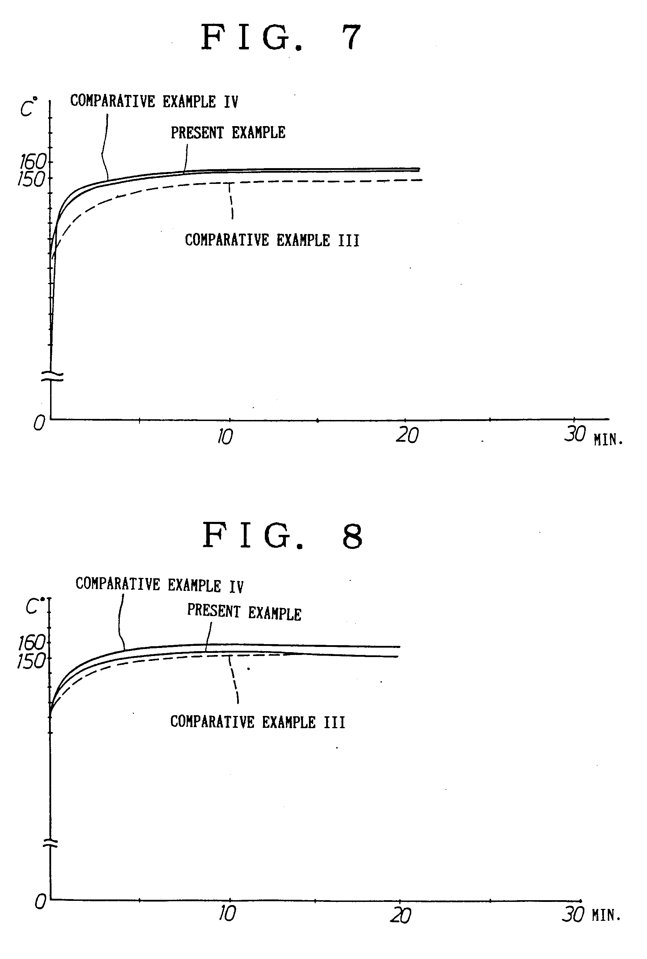

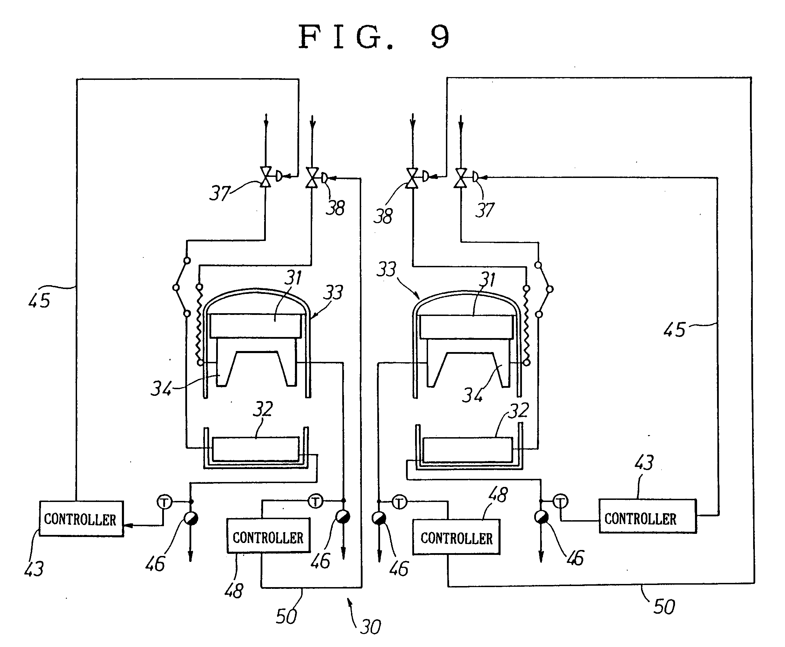

Next, tyres were prepared with a sidewall compound adapted to achieve low fuel consumption by heating the jacket 34 and the dome 33 at different temperatures. The results are given in Table 2 below and Figures 7 and 8.

**TABLE 2**

| | Example | Comp.Ex.III | Comp.Ex.IV |
|---|---|---|---|
| Temperature control | | | |
| Temp. of jacket | 165°C | 150°C | No steam* |
| Temp. of dome | 150°C | 150°C | 160°C |

| Tyre Temp. in vulcanisation | | | |
|---|---|---|---|
| Sidewall temp. | 150°C | 150°C | 160°C |
| Tread temp. | 160°C | 150°C | 160°C |
| Vulcanising time | 20 min | 24 min | 20 min |
| Fuel consumption (rolling resistance) | 95 | 95 | 100 |

| | | | |
|---|---|---|---|
| * No steam supply (heating by dome). | | | |

Based on the vulcanising temperature of Comparative Example IV in the Table, Comparative Example III listed wherein the same temperature was used for the jacket 34 and the dome 33 achieved a 5% improvement in vehicle fuel consumption but resulted in an increase of 4 minutes in the vulcanising time. However, the Example of the invention, in which different temperatures were used for the jacket 34 and the dome 33, achieved low fuel consumption without changing the vulcanising time since the lower temperature was used for the sidewalls 22 which are critical from the viewpoint of the tyre performance without changing the vulcanising temperature of the tread portion 21 which is slow to vulcanise.

Figure 7, showing the tread surface temperature, indicates that the tread portion 21 which is slow to vulcanise was vulcanised by the present embodiment at approximately the same temperature as in Comparative Example IV.

Further Figure 8, showing the sidewall surface temperature, reveals that the present embodiment is adapted to use approximately the same temperature as in Comparative Example III for the sidewall compound, for the compound to exhibit its properties most effectively.

Thus, the requirements of both the tyre properties and productivity can be fulfilled by employing the same temperature as in Comparative Example IV for the tread portion 21 which is slow to vulcanise and using a lower temperature for only the sidewalls 22 without a change in the vulcanising time. Although the embodiment of Figure 6, i.e. the independent temperature control system described, is adapted to control a pair of moulds at the same time, the supply piping and the discharge piping for the dome 33 and the jacket 34 can alternatively be provided for each of the moulds in the form of a separate opposed arrangement as shown in Figure 9.

The present invention is not limited to the foregoing embodiments but can be modified as desired without departing from the scope of the invention. For example, when a so-called two-piece mould is used in the system wherein the tread portion 21 and the sidewalls 22 are heated at different temperatures, different portions of the mould can be heated at different temperatures by incorporating steam piping or an electric heater into the mould and giving different amounts of heat from the dome side and from the mould side (tyre tread portion 21). Hot water is usable as the heat source for the jacket 4 or 34. Further to cool the tread portion 21 conversely to the above cases, steam, hot water or the like having a lower temperature than the medium for the platen assembly 3 (or the dome 33) can be used for the jacket 4 (or 34).

## Claims

1. A method of vulcanising a tyre (M) comprising placing the tyre (M) in a mould (15) comprising first mould members (17,20) for forming the tread portion (21) and second mould members (16) for forming the sidewall portions (22) and supplying a heating medium to vulcanise the tyre (M) characterised by supplying a first heating medium to heat the first mould members (17,20), measuring the temperature of this first heating medium, controlling the supply of the first heating medium using its measured temperature to control the temperature of the first mould members (17,20), supplying a second heating medium to heat the second mould members (16), measuring the temperature of the second heating medium and controlling the supply of the second heating medium using its measured temperature to control the temperature of the second mould members (16).

2. A method of vulcanising a tyre (M) according to claim 1 characterised by comparing the measured temperature of the heating medium with a pre-specified temperature and supplying the heating medium when the measured temperature is lower than the pre-specified temperature and stopping the supply of the heating medium when the measured temperature is equal to or higher than the pre-specified temperature.

3. A method of vulcanising a tyre (M) according to claim 1 or claim 2 characterised by the step of maintaining the temperature of the second mould members (16) at a lower temperature than the temperature of the first mould members (17,20).

4. A tyre vulcanising apparatus comprising first mould members (17,20) and second mould members (16) for forming the tyre tread (21) and tyre sidewalls (22) respectively and passages for the supply of heating medium characterised by a first set of passages for supplying a heating medium to heat the first mould members (17,20) and a second set of passages for supplying a heating medium to heat the second mould members (16) and first and second temperature control systems for controlling respectively the temperatures of the first and second mould members independently of each other.

5. An apparatus according to claim 4 characterised in that the independent temperature control systems (30) control the temperatures of a platen assembly (3) and a jacket (4).

6. An apparatus as defined in claim 4 characterised in that the independent temperature control systems (30) control the temperatures of a dome (33), and a jacket (34).

## Patentansprüche

1. Ein Verfahren zur Vulkanisation eines Reifens (M), welches die Schritte umfaßt, daß der Reifen (M) in einer Form (15) mit ersten Formbauteilen (17, 20) zum Formen des Laufflächenabschnitts (21) und zweiten Formbauteilen (16) zum Formen der Seitenwandabschnitte (22) angeordnet und ein Heizmedium zugeführt wird, um den Reifen (M) zu vulkanisieren,
dadurch **gekennzeichnet**,
daß ein erstes Heizmedium zugeführt wird, um die ersten Formbauteile (17, 20) zu heizen, die Temperatur dieses erstes Heizmediums gemessen wird, die Zufuhr des ersten Heizmediums gesteuert wird unter Verwendung seiner gemessenen Temperatur, um die Temperatur der ersten Formbauteile (17, 20) zu steuern, ein zweites Heizmedium zugeführt wird, um die zweiten Formbauteile (16) zu heizen, die Temperatur des zweiten Heizmediums gemessen wird und die Zufuhr des zweiten Heizmediums gesteuert wird unter Verwendung seiner gemessenen Temperatur, um die Temperatur der zweiten Formbauteile (16) zu steuern.

2. Ein Verfahren zur Vulkanisation eines Reifens (M) nach Anspruch 1,
dadurch gekennzeichnet,
daß die gemessene Temperatur des Heizmediums mit einer vorspezifizierten Temperatur verglichen und das Heizmedium zugeführt wird, wenn die gemessene Temperatur niedriger ist als die vorspezifizierte Temperatur, und die Zufuhr des Heizmediums gestoppt wird, wenn die gemessene Temperatur gleich oder höher ist als die vorspezifizierte Temperatur.

3. Ein Verfahren zur Vulkanisation eines Reifens (M) nach Anspruch 1 oder Anspruch 2,
gekennzeichnet durch den Schritt,
daß die Temperatur der zweiten Formbauteile (16) auf einer Temperatur niedriger als die Temperatur der ersten Formbauteile (17, 20) gehalten wird.

4. Eine Reifenvulkanisationsvorrichtung mit ersten Formbauteilen (17, 20) und zweiten Formbauteilen (16), um jeweils die Reifenlauffläche (21) und Reifenseitenwände (22) zu formen, und Durchgängen für die Zufuhr eines Heizmediums,
gekennzeichnet durch
einen ersten Satz von Durchgängen zum Zuführen eines Heizmediums, um die ersten Formbauteile (17, 20) zu heizen, und einen zweiten Satz von Durchgängen zum Zuführen eines Heizmedium, um die zweiten Formbauteile (16) zu heizen, und erste und zweite Temperatursteuerungssysteme, um jeweils die Temperaturen der ersten und zweiten Formbauteile unabhängig voneinander zu steuern.

5. Eine Vorrichtung nach Anspruch 4,
dadurch gekennzeichnet,
daß die unabhängigen Temperatursteuerungssysteme (30) die Temperaturen einer Auflageplattenanordnung (3) und eines Mantels (4) steuern.

6. Eine Vorrichtung nach Anspruch 4,
dadurch gekennzeichnet,
daß die unabhängigen Temperatursteuerungssysteme (30) die Temperaturen einer Haube (33) und eines Mantels (34) steuern.

## Revendications

1. Procédé de vulcanisation d'un pneumatique (M), comprenant la disposition du pneumatique (M) dans un moule (15) ayant des premiers organes (17, 20) de moule destinés à former la partie (21) de bande de roulement et des seconds organes (16) de moule destinés à former les parties (22) de flanc, et la transmission d'un fluide de chauffage pour la vulcanisation du pneumatique (M), caractérisé par la transmission d'un premier fluide de chauffage destiné à chauffer les premiers organes (17, 20) de moule, la mesure de la température de ce premier fluide de chauffage, le réglage de la transmission du premier fluide de chauffage avec utilisation de sa température mesurée pour le réglage de la température des premiers organes (17, 20) de moule, la transmission d'un second fluide de chauffage destiné à chauffer les seconds organes (16) du moule, la mesure de la température du second fluide de chauffage, et le réglage de la transmission du second fluide de chauffage à l'aide de sa température mesurée pour le réglage de la température des seconds organes (16) de moule.

2. Procédé de vulcanisation d'un pneumatique (M) selon la revendication 1, caractérisé par la comparaison de la température mesurée du fluide de chauffage à une température préalablement spécifiée, et la transmission du fluide de chauffage lorsque la température mesurée est inférieure à la température préalablement spécifiée, et l'interruption de la transmission du fluide de chauffage lorsque la température mesurée est égale ou supérieure à la température préalablement spécifiée.

3. Procédé de vulcanisation d'un pneumatique (M) selon la revendication 1 ou 2, caractérisé par l'étape de maintien de la température des seconds organes (16) de moule à une valeur inférieure à la température des premiers organes (17, 20) de moule.

4. Appareil de vulcanisation de pneumatique, comprenant des premiers organes (17, 20) de moule et des seconds organes (16) de moule destinés à former la bande de roulement (21) d'un pneumatique et les flancs (22) d'un pneumatique respectivement, et des passages de transmission d'un fluide de chauffage, caractérisé par un premier ensemble de passages destiné à transmettre un fluide de chauffage des premiers organes (17, 20) de moule et un second ensemble de passages destiné à transmettre un fluide de chauffage des seconds organes (16) de moule, et un premier et un second circuit de réglage de température destinés à régler respectivement les températures des premiers et seconds organes de moule indépendamment les uns des autres.

5. Appareil selon la revendication 4, caractérisé en ce que les circuits indépendants (30) de réglage de température règlent les températures d'un ensemble à plateaux (3) et d'une chemise (4).

6. Appareil selon la revendication 4, caractérisé en ce que les circuits indépendants (30) de réglage de température règlent les températures d'un dôme (33) et d'une chemise (34).
